# NEW EUROPEAN PATENT SPECIFICATION

(11) **EP 2 586 839 B2**
(45) Date of publication and mention of the opposition decision: **21.06.2017**
(45) Mention of the grant of the patent: 14.05.2014
(21) Application number: 11186904.6
(22) Date of filing: 27.10.2011
(51) Int. Cl.: C09D 167/00, C08L 67/00

(54) **A method for coating a coil of metal**
Verfahren zur Beschichtung einer Spule aus Metall
Procédé de revêtement d'une bobine métallique

(43) Date of publication of application: 01.05.2013
(73) Proprietor: King Saud University, 11421 Riyadh (SA)
(72) Inventor: Alam, Manawwer, 11421 Riyadh (SA); Alandis, Naseer M, 11421 Riyadh (SA)
(74) Representative: Scholz, Volker

(56) References cited:
- AU-B2- 435 690
- US-A- 3 714 091
- US-A- 5 681 890
- US-A- 5 972 471
- US-A- 5 972 471
- US-A1- 2003 023 025
- US-A1- 2010 076 154

## Description

The present invention relates to a method for coating a coil of metal.

Coil coatings are utilized for coating steel or alumina sheets in an economical, high speed process. In this process it is possible to achieve uniform coatings of a high quality with little waste of the coating material compared to other coating methods like spray application of a coating composition. The most important properties of a coil coating composition are gloss, scratch hardness, fastness to boiling water, bending flexibility and resistance to surface delamination or cracking upon bending of the substrate. Since coating takes place in large scale industrial processes low curing temperatures and a high line speed in the coating process are desired.

In US 6,040,414 a mixture of perfluoropolyethereal and oxyfluoroalkylenic as basis for a coil coating composition is disclosed. This resin has a bifunctional hydroxylic termination and is cured with blocked polyisocyanates having at least 3 NCO groups. In this approach high amounts of crosslinking agent are required.

US 4,968,775 discloses crosslinking of a polyester containing 2-methyl-1,3 propanediol, neopentyl glycol, isophthalic acid, terephthalic acid with alkylated aminoplast. This patent pertains to a thermosetting polyester polymer and its utilization as a binder in a coil coating composition.

US 5,380,816 relates to a resin composition containing a polyester with isophthalic acid, an aliphatic diol component including 2-methyl-1,3-propandiol and optionally a dicarboxylic acid other than isophthalic acid. The composition comprises further an aminoplast as a crosslinking agent and a catalyst.

US 4,734,467 relates to a coil coating composition consisting of a mixture of linear and branched polyester resin having hydroxyl values of 40-90 KOH/g. Good coating properties were achieved by using different crosslinking agents.

In US 4,229,555 a coating composition is disclosed which comprises benzene dicarboxylic acid, an alkyl dicarboxylic acid and a short chain alkylene diol component. The resin features a number average molecular weight of about 1500 to 5000 and acid and hydroxyl values of 20 to 60 mg of KOH per gram of polyester. The polyester were combined with an aminoplast and an acid catalyst and cured on a substrate.

US 0,076,154 relates to a curable coil coating composition comprising a mixture of polyester, crosslinking agent and solvent. The polyester resin comprises among others 1,3- and 1,4-cylcohexan dimethanol.

It is an object of the present invention to provide a method for coating a coil of metal which overcomes the drawbacks of the prior art. Particularly, a method for coating a coil of metal shall be provided which can be cured at low temperatures in less time and which simultaneously features excellent coating properties like gloss or hardness.

A method for coating a coil of metal shall be provided, which comprises applying a coating composition to the coil of a metal and curing the applied coating composition to form a cured coating, wherein the coating composition comprises a coil coating composition comprising
a) a polyester obtained by polymerizing a mixture comprising neopentyl glycol, trimethylol propane, adipic acid, phthalic acid, and isophthalic acid, and optionally comprising propylene glycol and/or maleic anhydride and/or glycerol;
b) a crosslinking agent;
c) a catalyst;
d) a solvent; and
e) optionally additives;
wherein the weight ratio of polyester:crosslinking agent is in a range from 95:5 to 60:40 based on solid;
the catalyst is an acid, more preferably para toluene sulphonic acid and/or dodecyl sulphonic acid and/or ortho phosphoric acid;
and the curing is carried out in a temperature range from 180-220°C wherein the curing duration is 32 seconds.

In a preferred embodiment, the crosslinking agent is an aminoplast resin, more preferably hexamethoxy methyl melamine formaldehyde and/or butylated melamine formaldehyde and/or alkylated benzoguanamin and/or urea formaldehyde.

Even preferred, the amount of the catalyst is in a range from 0.1-5.0 %wt referring to the polyester.

In a preferred embodiment, the solvent is an organic solvent or a mixture of different organic solvents, preferably selected from aromatic hydrocarbons, ketones, esters, glycolethers, more preferably methylethyl ketone, methylisobutyl ketone, ethylenegylcol monomethyl ether, ethyleneglycol monobutyl ether acetate, xylene, toluene, and/or N-methyl pyrrolidone.

In a further preferred embodiment, the additives are pigments, fillers, stabilizers or dispersing, flow-promoting or deforming agents.

Surprisingly, it was found that the method of coating a coil of metal of the present invention allows to prepare coatings with improved properties compared to the prior art. Particularly, the coatings feature enhanced gloss, scratch hardness, fastness to boiling water, bending flexibility and resistance to surface delamination or cracking.

Further, it was surprisingly found that the coil coating composition can be cured at low temperatures in a short time. This allows coating of a surface with an increased line speed.

The polyester resin used in the method of the present invention can be used to prepare coil coatings with desired properties by selecting the suitable monomer composition. The resins are soluble in organic solvents and do not crystallize over a period of 10 days. The shelf life of the polyester resin is longer than 6 months at a storing temperature of 30-45°C. It exhibits excellent intercoating adhesion between the primer and a top coat. Further, it has acid values between 5 to 25 mg of KOH/g and hydroxyl values between 10-50 mg of KOH/g. The esterification reaction between the alcohols and the acids shall be performed under inert atmosphere at temperatures between 175 to 250°C. FASCAT or dibutyl tin oxide are suitable catalysts. Reaction water has to be removed by azeotropic distillation.

The crosslinking agent for use in curing the resin has to have three or more groups which are able to react with a hydroxyl group of the polyester. Suitable aminoplast agents are melamine formaldehyde, hexamethoxymethyl melamine, urea formaldehyde, Cymel 1123 or more generally fully alkylated melamine resins and urea resins. Using a mixture of different crosslinking agents is feasible as well.

The invention will now be described in more detail by the following examples with the intention to exemplify the invention.

### Preparation of a polyester resin:

### EXAMPLE 1

A reactor with a fractional column, a condenser and a decanter was charged with 23.247 wt% neopentyl glycol (NPG), 8.115 wt% propylene glycol (PG), 4.769 wt% trimethylol propane (TMP), 8.661 wt% phthalic acid (PA), 23.634 wt% isophthalic acid (IPA), 8.660 wt% adipic acid (AA) 1.661 wt% maleic anhydride (MA) and 3.322 wt% glycerol (GLY). The mixture was heated to 185°C. When no further reaction water was removed by azeotropic distillation an aromatic solvent like xylene or toluene was added, the temperature was maintained in a range from 180-220°C and the acid value measured in regular intervals. After achieving a constant acid value the mixture was cooled to room temperature and added to some further solvent to maintain the solid and viscosity.

### EXAMPLES 2-8

Several other ester resins were prepared according to the procedure described in Example 1. The different polyester compositions can be taken from Table 1.

**Table 1**

| Polyester composition %wt | | | | | | | | | |
|---|---|---|---|---|---|---|---|---|---|
| **Exa**. | **NPG** | **PG** | **TMP** | **AA** | **PA** | **IPA** | **MA** | **GLY** | **FASCAT(gm)** |
| 1. | 23.25 | 08.12 | 04.77 | 08.66 | 23.63 | 26.59 | 01.66 | 03.32 | - |
| 2. | 24.16 | 07.95 | 04.67 | 10.81 | 23.13 | 26.03 | - | 03.25 | - |
| 3.* | 40.73 | - | - | 13.29 | 12.76 | 33.22 | - | - | 0.58 |
| 4. | 39.09 | - | 01.50 | 13.32 | 12.79 | 33.30 | - | - | 0.58 |
| 5. | 39.00 | - | 02.01 | 12.96 | 33.30 | 12.73 | - | - | 0.60 |
| 6.* | 40.80 | - | - | 13.20 | 12.80 | 33.20 | - | - | 0.60 |
| 7.* | 39.55 | - | - | 13.20 | 12.80 | 33.20 | - | 1.25 | 0.60 |
| 8. | 33.38 | - | 10.37 | 11.05 | 11.84 | 33.56 | - | - | 0.70 |

| | | | | | | | | | |
|---|---|---|---|---|---|---|---|---|---|
| Catalyst: FASCAT *comparative examples | | | | | | | | | |

### Preparation of white top coat coil coating composition

A coating composition was prepared by blending 25.00 parts per weight of a polyester according to the Examples 1-8, 5.0 parts per weight aromatic 100 (mixture of aromatic hydrocarbons), 5.0 parts per weight butyl CELLOSOLVE and 32.60 parts per weight rutile(titanium dioxide) pigment. The mixture was grinded to a fineness of 7.5 on a Hegman grind gauge in a shaker mill with glass beads. Afterwards, 10.0 parts per weight of an polyester according to the examples 1-8, 5.69 parts per weight of Cymel 1123, 2.68 parts per weight Aerosil 200, 0.10 parts per weight Syloid ED56, 0.33 parts by weight catalyst (Cytec CONACURE EA87), 1.00 part per weight flow additives (Afcone), 0.10 parts per weight para toluene sulphonic acid, 13.00 parts per weight solvent (Aromatic 100, and Butyl CELLOSOLVE) were blended.

All Examples of coil coating composition were cured at 200°C for 32 seconds.

The coating properties of the coated panel were determined by utilizing the following test methods. The results are summarized in Table 2.

### Cupping Test Adhesion

BS 3900E4 (cupping test adhesion) was used to measure the adhesion of the coating using Cupping Tester (Sheen Instruments Ltd England).

### Film Thickness

A minimum of 3 readings were taken and averaged using a Elcometer Model 345 (Elcometer Instruments, Manchester, England).

### Gloss Test

A minimum of 3 readings were taken and averaged using a Tri-Glossmaster (Sheen Instruments Ltd England) according to the method of ASTM D523.

### Impact Test

Impact resistance of the coating was measured by using a Tubular Impact Tester(Sheen Instruments Ltd England) according to the method of ASTM D2794-93.

### MEK Resistance - Double rubs

Methyl ethyl ketone(MEK) was used to determine the solvent resistance according to ASTM D5402. The number of double rubs(DR) is recorded when delamination/degradation of the film.

### Pencil Hardness

Pencil hardness was measured according to ASTM D3363.

### Scratch Hardness

The scratch hardness was measured on the cured coating using Mechanised Scratch Tester(Sheen Instruments England) according to the method of ASTM D5178.

### Fastness water boiling test

A coated panel was dipped in boiling water for 1 hour, then coating was observed like cracking, blister present/ absent

### Weather resistance

Gloss was measured after 750 hour exposure in sunshine weather-O-meter.

**Table 2**

| **Examples** | | | | | | | | |
|---|---|---|---|---|---|---|---|---|
| | 1 | 2 | 3 | 4 | 5 | 6 | 7 | 8 |
| **Resin Specification** | | | | | | | | |
| Solid(%) | 70 | 60 | 56 | 74 | 68 | 60 | 60 | 60 |
| Acid value | 13 | 7 | 8 | 14 | 18 | 21 | 15 | 20 |
| OH value | 85 | 120 | 50 | 65 | 62 | 51 | 63 | 65 |
| Viscosity*(poise) | 42 | 35 | 30 | 44 | 40 | 33 | 35 | 35 |

| **Test results** | | | | | | | | |
|---|---|---|---|---|---|---|---|---|
| Gloss at 60° | 84 | 98 | 94 | 95 | 90 | 88 | 94 | 85 |
| Pencil hardness | 7H | 5H | 3H | 4H | 3H | 3H | 3H | 5H |
| Scratch hardness(gm) | 1500 | 1500 | 1300 | 1400 | 1400 | 1200 | 1000 | 1000 |
| Cupping test(80mm) | pass | pass | pass | pass | pass | pass | pass | pass |
| Bending test | 2T | 1T | 0T | 0T | 0T | 0T | 0T | 0T |
| Impact test | pass | pass | pass | pass | pass | pass | pass | pass |
| Fastness to boil water(1hour) | pass | pass | pass | pass | pass | pass | pass | pass |
| MEK(DR) | 200 | 130 | 110 | 100 | 100 | 85 | 80 | 80 |
| Weather resistance | 78 | 92 | 90 | 90 | 82 | 84 | 86 | 80 |

| | | | | | | | | |
|---|---|---|---|---|---|---|---|---|
| * at 25°C | | | | | | | | |

The first part of Table 2 which is marked by the headline "resin specification" relates to important properties of the neat polyester before curing. The test results part relates to properties of the coil coating composition according to the preparation of the white top coating composition.

## Claims

1. A method of coating a coil of metal, comprising applying a coating composition to the coil of metal and curing the applied coating composition to form a cured coating, wherein the coating composition comprises a coil coating composition comprising
a) a polyester obtained by polymerizing a mixture comprising neopentyl glycol, trimethylol propane, adipic acid, phthalic acid, and isophthalic acid, and optionally comprising propylene glycol and/or maleic anhydride and/or glycerol;
b) a crosslinking agent;
c) a catalyst;
d) a solvent; and
e) optionally additives;
wherein the weight ratio of polyester: crosslinking agent is in a range from 95:5 to 60:40 based on solid;
the catalyst is an acid, preferably para toluene sulphonic acid and/or dodecyl sulphonic acid and/or ortho phosphoric acid; and
the curing is carried out in a temperature range from 180-220°C wherein the curing duration is 32 seconds.

2. Method according to claim 1, wherein the crosslinking agent is an aminoplast resin, more preferably hexamethoxy methyl melamine formaldehyde and/or butylated melamine formaldehyde and/or urea formaldehyde and/or alkylated benzoguanamin.

3. Method according to claim 1 or 2, wherein the amount of the catalyst is in a range from 0.1-5.0 %wt referring to the polyester.

4. Method according to any of the preceding claims, wherein the solvent is an organic solvent or a mixture of different organic solvents, preferably selected from aromatic hydrocarbons, ketones, esters, glycolethers, more preferably methylethyl ketone, methylisobutyl ketone, ethylenegylcol monomethyl ether, ethyleneglycol monobutyl ether acetate, xylene, toluene and/or N-methyl pyrrolidone.

5. Method according to any of the preceding claims, wherein the additives are pigments, fillers, stabilizers or dispersing, flow-promoting or deforming agents or mixtures thereof.

## Patentansprüche

1. Verfahren zum Beschichten einer Metallspule, umfassend Applizieren einer Beschichtungszusammensetzung auf die Metallspule und Härten der applizierten Beschichtungszusammensetzung, um eine gehärtete Beschichtung zu bilden, wobei die Beschichtungszusammensetzung eine Spulenbeschichtungszusammensetzung umfasst, die umfasst
a) einen Polyester, erhalten durch Polymerisieren eines Gemisches, umfassend Neopentylglykol, Trimethylolpropan, Adipinsäure, Phthalsäure und Isophthalsäure und wahlweise umfassend Propylenglykol und/oder Maleinsäureanhydrid und/oder Glycerin;
b) ein Vernetzungsmittel;
c) einen Katalysator;
d) ein Lösungsmittel; und
e) wahlweise Additive;
wobei das Gewichtsverhältnis von Polyester:Vernetzungsmittel in einem Bereich von 95:5 bis 60:40, bezogen auf Feststoff, ist;
der Katalysator eine Säure ist, vorzugsweise para-Toluolsulfonsäure und/oder Dodecylsulfonsäure und/oder ortho-Phosphorsäure; und
das Härten in einem Temperaturbereich von 180-220°C durchgeführt wird, wobei die Härtedauer 32 Sekunden ist.

2. Verfahren nach Anspruch 1, wobei das Vernetzungsmittel ein Aminoplast-Harz ist, besonders bevorzugt Hexamethoxymethylmelaminformaldehyd und/oder butyliertes Melaminformaldehyd und/oder Harnstoff-Formaldehyd und/oder alkyliertes Benzoguanamin.

3. Verfahren nach Anspruch 1 oder 2, wobei die Menge des Katalysators in einem Bereich von 0.1-5.0 Gew.-%, bezogen auf den Polyester, ist.

4. Verfahren nach einem der vorangehenden Ansprüche, wobei das Lösungsmittel ein organisches Lösungsmittel oder ein Gemisch aus verschiedenen organischen Lösungsmitteln ist, vorzugsweise ausgewählt aus aromatischen Kohlenwasserstoffen, Ketonen, Estern, Glykolethern, besonders bevorzugt Methylethylketon, Methylisobutylketon, Ethylenglykolmonomethylether, Ethylenglykolmonobutyletheracetat, Xylol, Toluol und/oder n-Methylpyrrolidon.

5. Verfahren nach einem der vorangehenden Ansprüche, wobei die Additive Pigmente, Füllstoffe, Stabilisatoren oder Dispersionsmittel, verlauffördernde Mittel oder Deformationsmittel oder Mischungen derselben sind.

## Revendications

1. Un procédé de revêtement d'un rouleau de métal, comprenant l'application d'une composition de revêtement au rouleau de métal et le durcissement de la composition de revêtement appliquée pour former un revêtement durci, dans lequel la composition de revêtement comprend une composition de revêtement de rouleau comprenant:
a) un polyester obtenu par polymérisation d'un mélange comprenant du néopentyl glycol, du triméthylol propane, de l'acide adipique, de l'acide phtalique et de l'acide isophtalique, et comprenant éventuellement du propylène glycol et/ou de l'anhydride maléique et/ou du glycérol;
b) un agent de réticulation;
c) un catalyseur;
d) un solvant; et
e) éventuellement des additifs;
dans lequel le rapport pondéral polyester/agent de réticulation est compris entre les proportions 95:5 et 60:40 exprimées par rapport à la masse solide;
le catalyseur est un acide, de préférence l'acide para toluène sulfoniqué, et/ou l'acide dodécyl sulfonique et/ou l'acide ortho phosphorique; et
le durcissement est mis en oeuvre dans un domaine de température compris entre 180-220°C, dans lequel la durée de durcissement est de 32 seconds.

2. Procédé selon la revendication 1, dans lequel l'agent de réticulation est une résine aminoplaste, plus préférentiellement du formaldéhyde d'hexaméthoxy méthyl mélamine et/ou du formaldéhyde mélamine butylée et/ou formaldéhyde d'urée et/ou benzoguanamine alkylée.

3. Procédé selon la revendication 1 ou 2, dans lequel la quantité de catalyseur est comprise entre 0.1 - 5.0% en poids exprimés par rapport au polyester.

4. Procédé selon l'une quelconque des revendications précédentes, dans lequel le solvant est un solvant organique, ou un mélange de différents solvants organiques, de préférence choisis parmi les hydrocarbures aromatique, les cétones, les esters, les glycoléthers, plus préférentiellement les méthyléthyl cétones, les méthylisobutyl cétones, l'éther monométhylique d'éthylèneglycol, l'éther monobutylique d'acétate d'éthylèneglycol, le xylène, toluène et/ou la N-méthyl pyrrolidone.

5. Procédé selon l'une quelconque des revendications précédentes, dans lequel les additifs sont des pigments, charges, agents de stabilisation ou agents de dispersion, agent favorisant l'écoulement ou agents déformants ou leurs mélanges.
